# EUROPEAN PATENT SPECIFICATION

(11) **EP 0 374 179 B1**
(45) Date of publication and mention of the grant of the patent: **07.07.1993**
(21) Application number: 88907913.3
(22) Date of filing: 27.07.1988
(51) Int. Cl.: F25B 17/02, F25B 27/00

(54) **INTERMITTENT SOLAR AMMONIA ABSORPTION CYCLE REFRIGERATOR**
VON SONNENENERGIE BETRIEBENER KÜHLAPPARAT MIT INTERMITTIERENDEM AMMONIAK-ABSORPTIONSKREISLAUF
REFRIGERATEUR SOLAIRE A CYCLE D'ABSORPTION INTERMITTENT FONCTIONNANT A L'AMMONIAC

(30) Priority: 27.07.1987 US 78048
(43) Date of publication of application: 27.06.1990
(73) Proprietor: ERICKSON, Donald Charles, Annapolis, MD 21401 (US)
(72) Inventor: ERICKSON, Donald Charles, Annapolis, MD 21401 (US)
(74) Representative: Schwabe - Sandmair - Marx
(86) International application number: PCT/US88/02556
(87) International publication number: WO 89/01119

(56) References cited:
- DE-A- 2 739 514
- DE-C- 517 555
- FR-A- 920 510
- US-A- 2 166 677
- US-A- 2 221 971
- US-A- 2 446 636
- US-A- 2 452 635
- US-A- 3 750 416
- US-A- 4 682 476

## Description

This invention relates to apparatus for producing refrigeration at temperatures below O^{o}C and/or producing ice using heat from the sun. More particularly it relates to intermittent solar-absorption cycles (heated by day, make ice at night) which use NH₃ as refrigerant and preferably liquid-phase absorbent solution for the NH₃.

Solar-powered refrigeration holds great promise for extending the benefits of refrigeration to areas not served by reliable central station generated electricity. However, in spite of a keen interest in this prospect for over thirty years, no solar-powered refrigerator has yet achieved all the desirable objectives of simplicity, reliability, and low cost. Simplicity implies both ease of operation and also ease of manufacture, particularly in lesser developed countries. Cost is a function of cycle efficiency as well as design techniques. Since lower efficiency requires greater collector area, extreme simplicity at the expense of very low efficiency imposes a costly tradeoff.

Three fundamental initial choices are made when categorizing solar thermally-activated refrigerators. They are: whether the cycle is continuous (absorption and generation occur simultaneously) or intermittent; what working fluid (i.e., refrigerant) is used (e.g., NH₃, MMA, halogenated hydrocarbon, methanol, sulfur dioxide, or H₂O); and whether a solid-phase or liquid-phase absorbent is used.

This disclosure is directed toward intermittent cycle (also known as periodical) refrigerators employing preferably NH₃ as working fluid and preferably liquid-phase absorbents.

Within this limited category, numerous problems are encountered in the various prior art solar-powered refrigerators. Various continuous-cycle solar refrigerators are known in the prior art, e.g., as described in U.S. Patents 4362025 and 4178989. Those cycles have the disadvantages that a solution pump is required (e.g., percolator type, with very imprecise flow rate), and also that the evaporation and absorption steps must occur only during the very limited time (about 5 hours per day) when generation and condensation are also occurring.

Various intermittent-cycle solar refrigerators are known which employ solid-phase absorbents, e.g., as described in U.S. Patent 4586345. When the solid absorbent is anhydrous (CaCl₂, SrCl₂, KSCN, or others) and the refrigerant is NH₃, those refrigerators have the advantage that only dry NH₃ is present, and hence aluminum construction is possible. However, they suffer the disadvantages that heat transfer with the solid particles is very poor; that shrinkage and swelling occurs leading to voids and possible ruptures; and that the heat necessary to desorb NH₃ from a solid is characteristically substantially higher than that necessary to desorb NH₃ from a liquid, thus requiring more solar energy for the production of a given amount of NH₃ refrigerant.

Various intermittent-cycle refrigerators employing either liquid or solid absorbents, but which use flame combustion as a source of heat, are known in the prior art. Included among them are the disclosures of U.S. Patents 1711804, 2446636, 2452635, and 2587996 (all solid-phase absorbents), and also U.S. Patent 2185330 (liquid-phase absorbent).

Numerous solar-powered liquid absorbent intermittent cycle refrigerators employing NH₃ as refrigerant have been described in the technical literature over the past thirty years. Representative examples include: F. Trombe and M. Foex, "Production of Cold by Means of Solar Radiation", Solar Energy, 1, 1957, p. 51-52; R.K. Swartman, et al., "Comparison of Ammonia-Water and Ammonia-Sodium Thiocyanate as the Refrigerant-Absorbent in a Solar Refrigeration System", Solar Energy, 17, 1974, p. 123-127; A. Venkatesh and M.C. Gupta, "Experimental Investigations of an Intermittent Ammonia-Water Solar Refrigerator", National Solar Energy Convention, Report CONF-781261, December 1978, p. 675-684; and R.H.B. Exell, et al., "Design and Testing of a Solar Powered Refrigerator", Asian Institute of Technology Research Report 126, 1981, Bangkok. Such a solar-powered refrigerator is furthermore disclosed by FR-A 920 510. The solar radiator known from this specification has a parabolic cylindrical shape to concentrate solar radiation onto a concentric cylindrical tube containing aqua ammonia. Several such tubes each with a solar radiator extend from an upstanding pressure vessel serving as a reservoir for the aqua ammonia. The pressure vessel extends above the height of these tubes. Cooling of the absorbent container during the absorption phase is not provided.

One generic problem which all solar-powered, intermittent-absorption-cycle refrigerators share is how to efficiently and economically collect and retain a maximum amount of solar heat into the absorbent solution by day when it is generating, yet equally effectively cool it by night when it is absorbing. Various solutions to this problem have been tried. Due to the elevated temperature above ambient while generating, at least one layer of glazing is normally employed to admit the solar radiation to the generator yet minimize the escaping thermal radiation (heat leak). Some designs have removable glazing for nighttime cooling. Others have dampers which can be opened to admit convective air flow under the glazing at night. Designs with flat plate collectors will normally have insulation on the side away from the sun, and that can be removed at night.

Clearly none of the above techniques presents much air-cooled surface for cooling the absorption mode, typically no more surface than the solar aperture dimensions. Since air contact cooling has a very low heat transfer coefficient, this cooling technique is not efficient. Removable glazing is unwieldy in larger sizes, and mitigates against retaining a good seal against rain and dust.

Another solution preferred is to have a separate heat removal circuit built into the generator which is only activated at night when it is in the absorption mode. The evaporator end of a thermosyphon can be incorporated in the generator, and an efficient air-cooled condenser end of the thermosyphon is located at a higher elevation such that liquid returns from the condenser to the evaporator by gravity. The thermosyphon technique for removal of absorption heat is illustrated in U.S. Patent 4586345. Note that a cutout valve is necessary in order to block liquid flow to the thermosyphon while the sun is shining, and the valve mechanism is solar-actuated. This system has several disadvantages: a completely separate air-cooled condenser plus associated refrigerant is required, which is only used at night; and when the liquid flow to the thermosyphon is cutout in order to stop the thermosyphoning action, all the liquid inventory in the thermosyphon evaporator must be boiled away before the heat removal ceases.

The five flame-actuated intermittent absorption refrigerators referenced above incorporate thermosyphons for removal of absorption heat. The '804 and '330 patents incorporate a separate closed-cycle thermosyphon with its own internal refrigerant, similar to the '345 solar patent. The other three patents ('635, '636, and '996), all directed to solid absorbents, incorporate open cycle thermosyphons which utilize the same condenser(s) and the same refrigerant as the refrigerator itself. Note they all incorporate two generator/absorber vessels, and they all locate the thermosyphon cutout valve in the liquid supply line.

Other problems found in the prior art practice of intermittent solar-powered refrigerators using high pressure refrigerants such as NH₃ or monomethylamine include:
1. The choice of solar collector geometry. With flat plate collectors, providing both the necessary storage volume of refrigerant absorbent and also the good thermal contact between solar radiation and the absorbent requires both a large storage vessel and many small pressure tubes welded to the storage vessel. Also, flat plate geometry presents much surface area for thermal leakage. However, the alternative to flat plate --concentrating collectors--may require tracking or frequent repositioning, which greatly increases the cost and complexity of the solar collector. This is especially true for high concentration ratios, e.g., 2.5 or more.
2. Many prior art designs incorporate the receiver directly in the evaporator, or at the same pressure as the evaporator. This requires that all of the refrigerant liquid in the receiver cools down by adiabatic flashing as the evaporator cools down. Thus much of the refrigerant is wastefully consumed, and a larger cold thermal boundary is present. When the receiver is integral with the evaporator, warm refrigerant liquid is collected in the cold box by day, contrary to the objective of keeping the cold spaces cold. Even worse is when the condenser and evaporator are physically the same component, which introduces latent as well as sensible heat to the evaporator (condenser) coil.
3. In prior art ammonia-water solar-powered refrigerators, frequently a rectifier is incorporated to reduce the H₂O content of the desorbed NH₃ vapor. However, without a rectifier only about 2% H₂O accumulates in the liquid NH₃ each day in a well-designed system. Furthermore, by proper design of the evaporator, and by incorporating a heat exchanger between liquid NH₃ to the evaporator and the fluid effluent the evaporator, it is possible to recapture refrigeration from that H₂O by subcooling the NH₃.
4. In less humid climates evaporative cooling can be much better than dry air cooling, permitting wet bulb cooling temperatures on the order of 5^{o}C below ambient temperature. Similarly, water cooling provides much better heat transfer than air cooling. Unfortunately the prior art attempts to obtain these benefits have involved very large and costly water tanks, constructed, for example, out of porous cement, thus requiring extensive field construction. Also the porosity decreases with time, providing excessive water loss early on and insufficient wicking later on. Water availability can also be a problem.

What is needed, and included in the objectives of this invention, is a solar thermally-actuated intermittent-absorption-cycle refrigerator which:
. requires only one or two simple vessels for containment of the absorbent solution, and the solar radiation is directed on at least one of these vessels;
. achieves an efficient concentration of the solar radiation and achieves preferably a concentration ratio between about 1.3 and 2.5 but does not require tracking; and
. has an efficient and economical means of cooling the absorbent container which does not require removing insulation or glazing, nor does it require a water tank of capacity greater than the absorbent vessel.

A solar-powered intermittent-absorption-refrigeration apparatus is disclosed which overcomes the prior art limitations by combining the features of claim 1, in particular:
. providing a solar-reflector for concentrating solar radiation onto a pressure vessel which is of an approximately circular cross-section; and
. providing a cutout valve in the conduit for transporting evaporated refrigerant from a thermosyphon evaporator which is in heat exchange contact with the absorbent in the pressure vessel to a condenser for condensing refrigerant vapor desorbed from said absorbent.

In the pressure vessel there is preferably provided is a charge of liquid absorbent for ammonia (preferably aqua ammonia).

The thermosyphon evaporator is preferably supplied liquid NH₃ from a receiver vessel (located at or above the thermosyphon evaporator height), whereby the receiver vessel should be separate from the NH₃ evaporator and outside the cold boundary. The same condenser is used for the the thermosyphon during the cooling phases as is used by day for condensing desorbed NH₃ vapor.

The condenser is preferably finned for efficient air cooling, at least in part. The cutout valve for the thermosyphon is used to halt its operation during the solar radiation period; the cutout valve is located in the vapor leg of the thermosyphon evaporator. The valve also may be solar-actuated, but is preferably simply a manually operated valve. Also, in order to preclude backflow of NH₃ vapor from the condenser into the (absorber) pressure vessel by night, a check valve (one-way valve) is positioned in the conduit between the vapor space (upper portion) of the pressure vessel and the condenser.

By using a horizontal cylindrical pressure vessel, a low cost containment is obtained for the absorbent. By locating the cylinder at the focus of the solar reflector, a large target is presented which gives rise to a solar acceptance angle on the order of 60^{o}, while also having a concentration ratio in excess of 1.5. The preferred reflector geometry is the "truncated compound parabolic collector (CPC)", which is known in the prior art. Thus heat leakage is minimized, and yet no tracking is necessary--the collector is stationary, except for seasonally adjusted extensions.

With the "open cycle" thermosyphon, only a single efficient ambient-cooled condenser is required. With ammonia-water or ammonia-NaSCN as the working pair, the generator can be constructed of low cost mild steel. All other components which are exposed to ambient weather conditions may be constructed of a more corrosion- resistant material such as stainless steel.

The liquid NH₃ is collected in a reservoir or receiver vessel by day, which provides the inventory of NH₃ necessary to support both evaporation and thermosyphoning throughout the night. By locating the thermosyphon evaporator below the receiver, it will operate until the receiver is empty, at which time it is no longer necessary to thermosyphon. The pressure reduction device (orifice, valve, thermostatic expansion valve, capillary, or the like) supplying liquid NH₃ from the receiver to the evaporator must be located downstream of the supply to the thermosyphon, since the thermosyphon must operate at the pressure of the condenser, not the evaporator.

The receiver vessel is not insulated from ambient temperature. Indeed, it may advantageously be designed for maximum heat exchange with ambient, thereby further increasing the effectiveness of the condenser. One method of doing this is to wrap the receiver in a water-wicking material such as fiberglass or treated polyprophylene cloth, and then position a tray of water in contact with some portion of the wick. This will give rise to efficient evaporative cooling.

As described, the apparatus has no moving parts other than approximately three valves, and requires no electrical supply and minimal operator action.

The disclosed open-cycle thermosyphon absorber heat removal construction will apply to solar-intermittent-absorption refrigerators employing solid absorbents also. It also applies to systems using other refrigerants than NH₃. It also applies to flat-plate collector geometries as well as to various concentrating configurations.

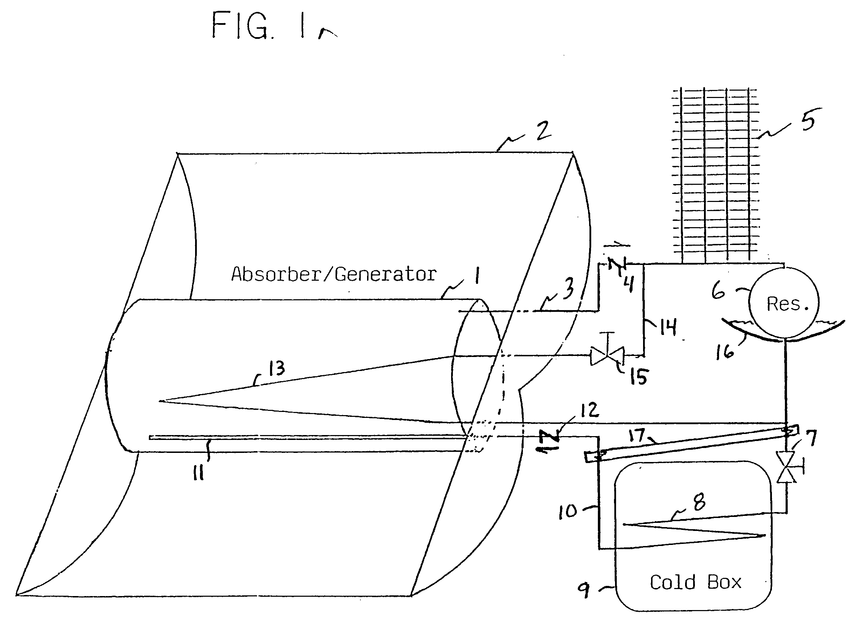

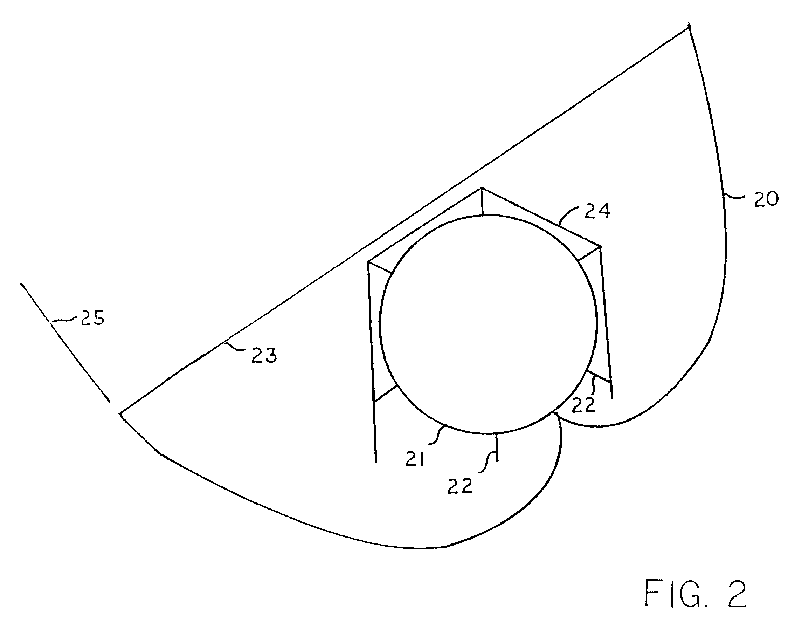

Figure 1 is a schematic simplified representation of the intermittent solar ammonia absorption cycle ("ISAAC") refrigerator, including a depiction of the internal components in the generator vessel. Figure 2 is a cross-sectional representation of the solar reflector and generator, depicting glazing, finning, and a seasonally re-positioned extension.

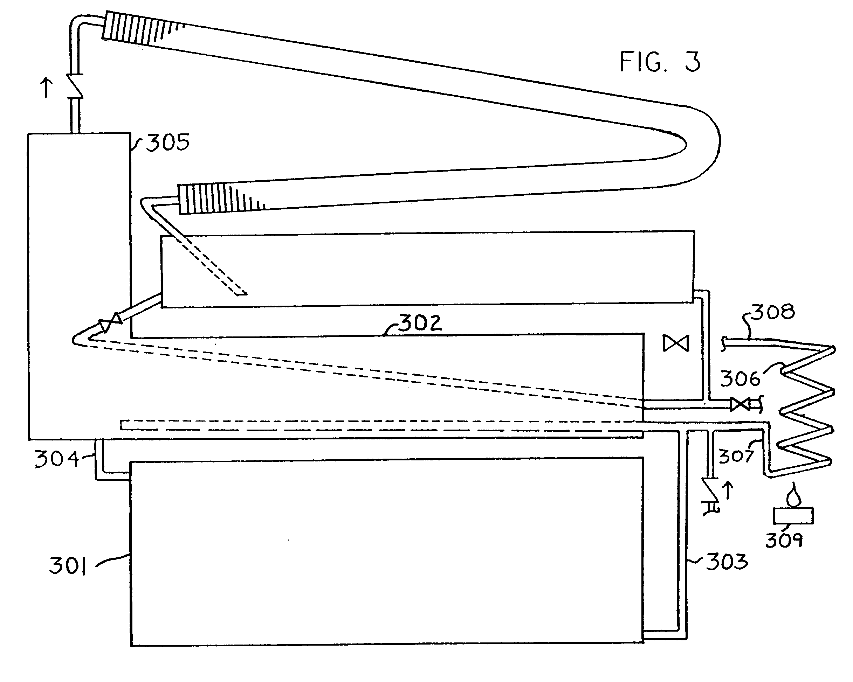

Figure 3 illustrates three improvements to the Figure 1 flowsheet: an auxiliary generator (vertical section) which compensates for liquid level changes and keeps the solar-irradiated section of the generator always full of liquid; an "active" fin (also called "thermal wall") which increases the solar target area without accompanying disproportionate increases in absorbent volume; and an auxiliary burner coil which allows the apparatus to be operated on cloudy days.

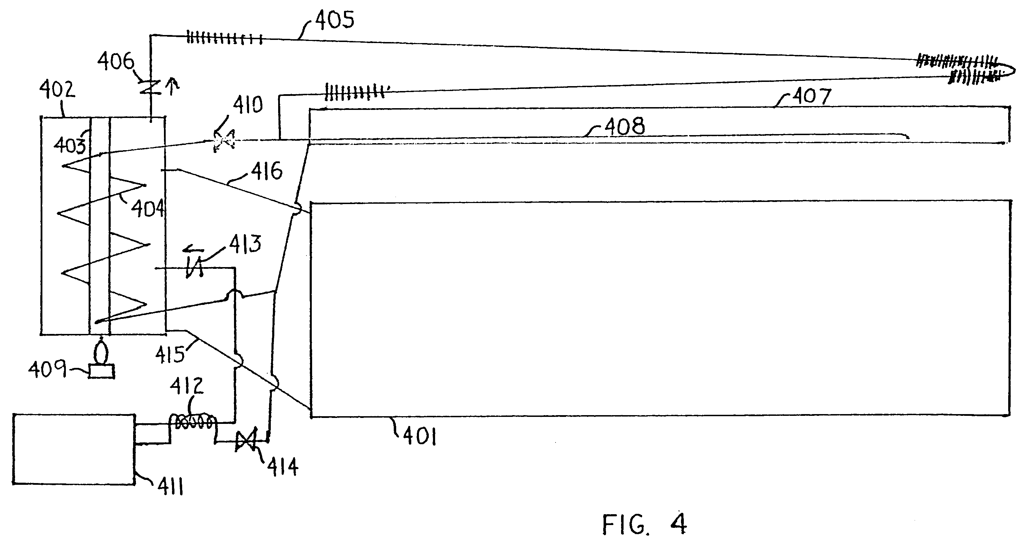

Figure 4 illustrates a further variation, in which only the thermal wall is solar irradiated, and the bulk of the absorbent solution inventory is in a simple compact insulated vessel outside the solar collector. A central burner tube is incorporated for cloudy day operation.

Referring to Figure 1, a generally cylindrical pressure vessel 1 containing refrigerant and absorbent (e.g., aqua-ammonia) is mounted horizontally in an arcuate solar collector 2 having internal reflective surface which reflects solar radiation onto cylinder 1. The reflector geometry may be of generally parabolic shape, and preferably has a cusp to prevent escape of some reflections. The truncated compound parabolic shape is particularly preferred, where the ratio of solar aperture to effective cylinder diameter is in the range of about 1.3 to 2.5. A vapor exit conduit 3 connects the upper portion of cylinder 1 to condenser 5 via one-way valve 4, which prevents backflow of vapor into the cylinder. Alternatively a manual valve could be used. Condenser 5 is preferably air-cooled finned tubing. The condensate from condenser 5 collects in receiver 6 by day, and is discharged to evaporator coil 8 via means for pressure reduction 7 by night. The evaporator coil is located in the space to be refrigerated, e.g., cold box 9. A conduit 10 conveys the evaporated refrigerant to cylinder 1 for absorption into the absorbent by night. Bubbler tube 11 ensures good mixing of the vapor into the absorbent, and the horizontal orientation of the cylinder minimizes the liquid hydrostatic backpressure. Optional check valve 12 will prevent backflow of a small amount of absorbent into the evaporator coil during the day. Reservoir 6 also supplies liquid NH₃ to thermosyphon evaporator 13, which is a continuously uphill-sloped length of pipe or tubing extending inside most of the length of cylinder 1. The exit vapor passes through conduit 14 containing cutout valve 15 to condenser 5. Optional water tray 16 is fitted to receiver 6 to keep its optional wick jacket wet, should evaporative cooling be desired. Conduit 3 is well-insulated up to check valve 4 to prevent any significant amount of condensate forming therein and draining back 35 to cylinder 1. Condenser 5 is necessarily located above receiver 6, and thermosyphon evaporator 13 is located slightly below the height of receiver 6. Sensible and latent heat is preferably exchanged between the pressurized liquid NH₃ en route to pressure reduction device 7 and the almost entirely evaporated fluid exiting from evaporator 8, in heat exchanger 17.

In Figure 2, the general cross-sectional shape of a truncated CPC 20 is shown. For cylinder 21 diameters of larger than about 0.2 meter, the decreasing surface to volume ratio requires that either more solar radiation be intercepted or less absorbent volume be contained than that which is characteristic of simple cylindrical geometry. Thus for larger cylinders it is desirable to incorporate fins 22, which will increase the effective target area. The outer glazing 23 both reduces heat leak and protects the reflective surface from rain and dust. It is preferably polycarbonate or similar non-shattering material. The optional inner glazing 24 is primarily for further reduction of heat leak. It may be simply draped over cylinder 1 as illustrated, and is preferably of very thin TFE film, to maximize transmittance and to withstand high local temperatures. The CPC geometry is preferably extended by a piece of repositionable reflector 25, which is relocated each March and September to the side away from the sun for the ensuing six months.

Referring to Figure 3, several improvements are illustrated which solve potential problems of the Figure 1 configuration. One problem is the surface-to-volume ratio. The passive fins illustrated in Figure 2 should not be longer than about 2 to 3 cm, as otherwise the fin temperature increases excessively beyond the generator temperature under solar irradiation. This limits the maximum possible solar aperture to about 1.5 m, given that the generator cylinder be kept nearly full of liquid. In order to further increase the maximum aperture, and thus enable low cost construction of larger units, it has been discovered that an "active" fin solves this problem, i.e., a fin which has boiling absorbent solution inside it, the absorbent fluid being in communication with that in the cylindrical section of the generator. In order to have gravity feed of absorbent liquid from the cylinder to the fin, and percolator (gas lift) return of vapor-liquid mixture from the fin back to the cylinder, the fin must be located below at least part of the cylinder. The active fin, also known as a "thermal wall", can economically be constructed from two flat plates of stainless steel which are welded together around their periphery, then tack-welded together in numerous spots inside the peripheral weld, and finally are inflated slightly by gas pressure. Component 301 of Figure 3 indicates such an active fin which is connected to generator cylinder 302 by liquid supply conduit 303 and by vapor-liquid return conduit 304. With this active fin, virtually unlimited solar apertures can be achieved in low cost non-tracking configurations while keeping the absorbent solution inventory proportionate to the aperture width.

A second problem area addressed by Figure 3 is the change in volume of the absorbent liquid, amounting to about 20% due to combined effects of temperature change and concentration change. A simple horizontal cylindrical generator would thus be about 1/4 empty at the end of the day, and hence the sun shining on its uppermost non-wetted part would wastefully cause over-temperature. It would be desirable to keep the horizontal cylinder essentially full at all times, and that is the purpose of vertical section 305 of the generator. It provides an additional absorbent volume of about 20% outside the solar-irradiated area, and is heavily insulated.

The third problem is what to do about cloudy days, when the need for ice is urgent. Coil 306 is fitted to generator 302 via liquid supply line 307 and vapor-liquid return line 308, and a flame 309 causes both desorption and gas-lift circulation of the absorbent from the coil to the generator. Isolation valve 310 may be incorporated to preclude natural convection flow when the burner is not lit.

Figure 4 illustrates an alternative configuration of the three improvements of Figure 3. In Figure 4, only the thermal wall 401 is in the solar irradiated area, and the remainder of the generator 402 is thus a simple, compact, heavily insulated vessel. Thus vessel 402 incorporates the necessary expansion volume, and also may be fitted with a burner tube 403 for the auxiliary heat source. The thermosyphon evaporator 404 is preferably a coil inside vessel 402, which may be enhanced with external fins. With the solar target 401 being generally flat, low cost fiat glazing can be applied, and the solar reflector no longer requires a cusp. The vapor and liquid feed into receiver 407 is through a bubbler tube in order to prevent receiver liquid from subcooling, and hence maximize the heat rejection from the wetted wick surrounding the receiver.

Other components in Figure 4 are the fin tube condenser 405, NH₃ vapor one-way valve 406; wetted receiver 407 (including bubbler tube 408); heat source 409; thermosyphon cutout valve 410; cold box and evaporator 411; liquid NH₃ refrigerant cooler 412; refrigerant vapor return one-way valve 413; refrigerant supply valve 414; and conduits 415 and 416 which connect thermal wall 401 to pressure vessel 402.

It has also been found advantageous to incorporate a pressure reducing valve in the liquid NH₃ supply line to the evaporator, and to locate the water reservoir for the wick material above the receiver.

## Claims

1. An absorption refrigeration apparatus comprised of
a) a pressure vessel (1) for containment of an absorbent containing absorbed refrigerant;
b) a device (2) for applying heat onto said pressure vessel (1);
c) a condenser (5) for condensing refrigerant vapor desorbed from said absorbent, and a conduit (3) connecting the upper portion of said pressure vessel (1) to said condenser (5);
d) a refrigeration evaporator (8) which is supplied refrigerant which has been condensed in said condenser (5);
e) a conduit (10, 11) for returning evaporated refrigerant from said refrigeration evaporator (8) to said absorbent in said pressure vessel (1);
f) a thermosyphon evaporator (13) in heat exchange contact with said absorbent for removal of heat from said absorbent; and
g) a conduit for transporting refrigerant condensed in said condenser (5) to said thermosyphon evaporator (13), and a conduit (14) for transporting evaporated refrigerant from said thermosyphon evaporator (13) to said condenser (5);
characterized by the following features:
h) the absorption refrigeration apparatus is solar-powered with a solar-reflector (2) for concentrating solar radiation onto said pressure vessel (1) which is of an approximately circular cross-section; and
i) a cutout valve (15) is provided in said conduit (14) for transporting evaporated refrigerant from said thermosyphon evaporator (13) to said condenser (5).

2. Apparatus according to claim 1, additionally comprised of
a check valve (12) in said conduit (10) for returning evaporated refrigerant; and
a one-way valve (4) in said conduit (3) between the upper portion of said pressure vessel (1) and said condenser (5), whereby refrigerant vapor can only flow out of said pressure vessel (1) via said conduit (3).

3. Apparatus according to claim 2, additionally comprised of
a receiver vessel (6) for collecting condensed refrigerant from said condenser (5) and supplying it to said refrigeration evaporator (8) via a means (7) for pressure reduction; and
a means for cutting out flow of condensed refrigerant to the evaporator (8) when the pressure vessel (1) is receiving solar radiation.

4. Apparatus according to claim 3, further characterized by said receiver vessel (6) being located at an elevation no lower than the elevation of said thermosyphon evaporator (13).

5. Apparatus according to any of the preceding claims, wherein a liquid absorbent is employed.

6. Apparatus according to claim 5, wherein the refrigerant is ammonia and the liquid absorbent is aqua ammonia.

7. Apparatus according to claim 4, further characterized by a means (17) for heat exchange between refrigerant to and from said refrigeration evaporator (8).

8. Apparatus according to claim 4, further characterized by
a means (17) for heat exchange between refrigerant to and from said refrigeration evaporator (8);
a means for maintaining the exterior of said receiver vessel (6) wet with water; and
at least one transparent glazing between the sun and said pressure vessel (1).

9. Apparatus according to claim 5, further characterized by
a transparent glazing covering at least the major portion of said reflector (2) including said pressure vessel (1);
a plurality of external longitudinal fins (22; 301) on said pressure vessel (1); and
a second transparent glazing (24) draped over said fins (22; 301).

10. Apparatus according to claim 5, additionally comprised of
an additional solar-irradiated component (301) containing absorbent solution, plus a liquid-feed conduit (303) and a vapor-liquid return conduit (304) which connect it to said pressure vessel (302).

11. Apparatus according to claim 4, wherein said pressure vessel (302) incorporates an insulated vertical section (305) which extends above the height of a horizontal section of said pressure vessel (302).

12. Apparatus according to claim 4, additionally comprised of
a combustion heat source (309);
an upwardly sloping conduit (306) which is heated by said heat source (309); and
a liquid-supply conduit (307) and vapor-liquid-return conduit (308) which connect said upwardly sloping conduit (306) to said pressure vessel (302).

13. Apparatus according to claim 3, wherein
a solar-irradiated portion (401) of said pressure vessel is connected to an insulated portion (402) of said pressure vessel by a liquid feed conduit and a vapor-liquid return conduit; and wherein
a burner tube (403) extends through part of said insulated portion (402) of said pressure vessel.

14. Apparatus according to any of the preceding claims, wherein the geometry of the reflector (2) is of truncated compound parabolic shape including a cusp.

## Patentansprüche

1. Absorptions-Kühlapparat mit
a) einem Druckbehälter (1) zur Einschließung eines absorbiertes Kühlmittel enthaltenden Absorptionsmittels;
b) einer Einrichtung (2) zur Aufbringung von Hitze auf den Druckbehälter (1);
c) einem Kondensator (5) zum Kondensieren von von dem Absorptionsmittel desorbiertem Kühlmitteldampf, und einer Leitung (3), die den oberen Teil des Druckbehälters (1) mit dem Kondensator (5) verbindet;
d) einem Kälteerzeugungs-Verdampfer (8), der mit Kühlmittel versorgt wird, welches im Kondensator (5) kondensiert worden ist;
e) einer Leitung (10, 11) zur Rückführung von verdampftem Kühlmittel vom Kälteerzeugungs-Verdampfer (8) zum Absorptionsmittel im Druckbehälter (1);
f) einem Thermo-Syphon-Verdampfer (13) in Wärmeaustausch-Kontakt mit dem Absorptionsmittel zur Abführung von Wärme vom Absorptionsmittel; und
g) einer Leitung zum Transportieren von im Kondensator (5) kondensiertem Kühlmittel zum Thermo-Syphon-Verdampfer (13), und einer Leitung (14) zum Transportieren von verdampftem Kühlmittel vom Thermo-Syphon-Verdampfer (13) zum Kondensator (5);
gekennzeichnet durch die folgenden Merkmale:
h) der Absorptions-Kühlapparat wird mit Sonnenenergie betrieben mit einem Solar-Reflektor (2) zur Konzentration der Sonnenstrahlung auf den Druckbehälter (1), der annähernd kreisförmigen Querschnitt hat; und
i) ein Absperr- bzw. Sicherungsventil (15) ist in der Leitung (14) zum Transportieren von verdampftem Kühlmittel vom Thermo-Syphon-Verdampfer (13) zum Kondensator (5) vorgesehen.

2. Apparat nach Anspruch 1, der zusätzlich aufweist
ein Absperrventil (12) in der Leitung (10) zur Rückführung von verdampftem Kühlmittel; und
ein Einwegventil (4) in der Leitung (3) zwischen dem oberen Teil des Druckbehälters (1) und dem Kondensator (5), wodurch Kühlmitteldampf aus dem Druckbehälter (1) nur durch die Leitung (3) abfließen kann.

3. Apparat nach Anspruch 2, der zusätzlich aufweist
einen Aufnahmebehälter (6) zum Sammeln von kondensiertem Kühlmittel vom Kondensator (5) und zu dessen Zuführung zum Kälteerzeugungs-Verdampfer (8) über eine Vorrichtung (7) zur Druckverminderung; und
eine Vorrichtung zum Abtrennen des Flusses von kondensiertem Kühlmittel zum Verdampfer (8), wenn der Druckbehälter (1) Sonnenstrahlung empfängt.

4. Apparat nach Anspruch 3, ferner gekennzeichnet dadurch, daß der Aufnahmebehälter (6) auf einer Höhe angeordnet ist, die nicht niedriger ist als die Höhe des Thermo-Syphon-Verdampfers (13).

5. Apparat nach einem der vorhergehenden Ansprüche, wobei ein flüssiges Absorptionsmittel verwendet wird.

6. Apparat nach Anspruch 5, wobei das Kühlmittel Ammoniak und das Absorptionsmittel wässriges (aqua) Ammoniak ist.

7. Apparat nach Anspruch 4, ferner gekennzeichnet durch eine Vorrichtung (17) zum Wärmeaustausch zwischen Kühlmittel vom bzw. zum Kälteerzeugungs-Verdampfer (8).

8. Apparat nach Anspruch 4, ferner gekennzeichnet durch
eine Vorrichtung (17) zum Wärmeaustausch zwischen Kühlmittel von und zum Kälteerzeugungs-Verdampfer (8);
eine Vorrichtung zum Naßhalten der Außenseite des Aufnahmebehälters (6) mit Wasser, und
mindestens eine transparente Verglasung zwischen der Sonne und dem Druckbehälter (1).

9. Apparat nach Anspruch 5, ferner gekennzeichnet durch
eine transparente Verglasung, die zumindest den größeren Teil des Reflektors (2), der den Druckbehälter (1) enthält, bedeckt;
eine Vielzahl von äußeren länglichen Rippen (22; 301) auf dem Druckbehälter (1); und
eine zweite über die Rippen (22; 301) drappierte Verglasung (24).

10. Apparat nach Anspruch 5, der
ein Absorptionsmittellösung enthaltendes, zusätzliches sonnenbestrahltes Bauteil (301), plus eine Flüssigkeits-Zufuhrleitung (303) und eine Dampf-Flüssigkeits-Rückführleitung (304), welche es mit dem Druckbehälter (302) verbindet, aufweist.

11. Apparat nach Anspruch 4, wobei der Druckbehälter (302) einen isolierten vertikalen Abschnitt (305), der sich über die Höhe eines horizontalen Abschnitts des Druckbehälter (302) erstreckt, inkorporiert.

12. Apparat nach Anspruch 4, der zusätzlich aufweist
eine Verbrennungswärmequelle (309);
eine aufwärts geneigte Leitung (306), welche durch die Wärmequelle (309) beheizt wird; und
eine Flüssigkeitsversorgungsleitung (307) und Dampf-Flüssigkeits-Rückführungsleitung (308), welche die nach oben geneigte Leitung (306) mit dem Druckbehälter (302) verbinden.

13. Apparat nach Anspruch 3, wobei
ein sonnenbestrahlter Teil (401) des Druckbehälters mit einem isolierten Teil (402) des Druckbehälters durch eine Flüssigkeitszuführungsleitung und eine Dampf-Flüssigkeits-Rückführungsleitung verbunden ist; und wobei
ein Brennerrohr (403) sich durch einen Teil des isolierten Teils (402) des Druckbehälters erstreckt.

14. Apparat nach einem der vorhergehenden Ansprüche, wobei die Geometrie des Reflektors (2) eine abgeschnittene bzw. kegelstumpfartige zusammengesetzte parabolischen Form mit einer Spitze ist.

## Revendications

1. Appareil de réfrigération par absorption, comportant:
a) un récipient sous pression (1) pour contenir un absorbant contenant le réfrigérant absorbé;
b) un appareil (2) pour appliquer de la chaleur audit récipient sous pression (1);
c) un condenseur (5) pour condenser la vapeur de réfrigérant désorbée dudit absorbant et une conduite (3) reliant la portion supérieure dudit récipient (1) audit condenseur (5);
d) un évaporateur à réfrigération (8) auquel est fourni du réfrigérant qui a été condensé dans ledit condenseur (5);
e) une conduite (10, 11) pour ramener le réfrigérant évaporé depuis ledit évaporateur à réfrigération (8) audit absorbant dans ledit récipient de pression (1);
f) un évaporateur à thermosiphon (13) en contact d'échange de chaleur avec ledit absorbant pour soustraire de la chaleur audit absorbant; et
g) une conduite pour transporter le réfrigérant condensé dans ledit condenseur (5) vers ledit évaporateur à thermosiphon (13), et une conduite (14) pour transporter le réfrigérant évaporé dudit évaporateur à thermosiphon (13) vers ledit condenseur (5);
caractérisé en ce que:
h) l'appareil de réfrigération par absorption est alimenté en énergie solaire au moyen d'un réflecteur solaire (2) pour concentrer les rayonnements solaires sur ledit récipient sous pression (1) possédant une section transversale environ circulaire; et
i) une vanne d'arrêt (15) est prévue dans ladite conduite (14) pour transporter le réfrigérant évaporé dudit évaporateur à thermosiphon (13) audit condenseur (5).

2. Appareil selon la revendication 1, comportant de plus un clapet anti-retour (12) dans ladite conduite (10) pour retourner le réfrigérant évaporé; et une vanne à une voie (4) dans ladite conduite (3) entre la portion supérieure dudit récipient sous pression (1) et le condenseur (5), la vapeur de réfrigérant ne pouvant s'écouler hors dudit récipient sous pression (1) que par ladite conduite (3).

3. Appareil selon la revendication 2, comportant de plus un récipient récepteur (6) pour collecter ledit réfrigérant sortant dudit condenseur (5) et le fournir audit évaporateur (8) en passant par un moyen (7) pour réduire la pression; et un moyen pour isoler le courant de réfrigérant condensé vers l'évaporateur (8) lorsque le récipient sous pression (1) reçoit le rayonnement solaire.

4. Appareil selon la revendication 3, caractérisé de plus par le fait que ledit récipient sous pression (6) se trouve à une hauteur qui n'est pas inférieure à la hauteur d'élévation dudit évaporateur à thermosiphon (13).

5. Appareil selon l'une des revendications précédentes, dans lequel on utilise un absorbant liquide.

6. Appareil selon la revendication 5, dans lequel le réfrigérant est de l'ammoniac et l'absorbant liquide est de l'eau ammoniacale.

7. Appareil selon la revendication 4, caractérisé de plus par un moyen (17) d'échange de chaleur entre le réfrigérant vers et depuis l'évaporateur à réfrigération (8).

8. Appareil selon la revendication 4, caractérisé de plus par un moyen (17) pour l'échange de chaleur entre le réfrigérant circulant vers et depuis l'évaporateur à refroidissement (8); un moyen pour maintenir l'extérieur du récipient récepteur (6) mouillé d'eau et au moins un vitrage transparent entre le soleil et le récipient sous pression (1).

9. Appareil selon la revendication 5, caractérisé de plus par un vitrage transparent couvrant au moins la majeure partie dudit réflecteur (2) y compris ledit récipient sous pression (1); une pluralité d'ailettes longitudinale externes (22; 301) sur le récipient sous pression et un second vitrage transparent (24) tendu sur les ailettes (22, 301).

10. Appareil selon la revendication 5, comportant de plus un composant (301) supplémentaire exposé au rayonnement solaire, contenant la solution d'absorbant, et une conduite d'amenée de liquide (303) et une conduite de retour de vapeur (304) le reliant audit récipient sous pression (302).

11. Appareil selon la revendication 4, dans lequel ledit récipient sous pression (302) comporte une section verticale isolée (305) s'étendant au dessus de la hauteur d'une partie horizontale dudit récipient sous pression (302).

12. Appareil selon la revendication 4, comportant de plus une source de chaleur par combustion (309);
une conduite en pente vers le haut (306), qui est chauffée par la même source de chaleur (309);
et
une conduite d'amenée de liquide (307) et une conduite de retour de vapeur-liquide (308) qui relie ladite conduite en pente vers le haut (306) vers ledit récipient sous pression (302).

13. Appareil selon la revendication 3, dans lequel une partie (401) dudit récipient sous pression soumise au rayonnement solaire est reliée à une partie isolée (402) dudit récipient sous pression par une conduite d'amenée de liquide et une conduite de retour de vapeur-liquide; et dans lequel un tube de brûleur (403) s'étend à travers une partie de la portion isolée (402) dudit récipient sous pression.

14. Appareil selon l'une des revendications précédentes, dans lequel le réflecteur (2) présente une géométrie de forme parabolique complexe tronquée comportant un point de rebroussement.
